# EUROPEAN PATENT SPECIFICATION

(11) **EP 2 517 561 B1**
(45) Date of publication and mention of the grant of the patent: **25.06.2014**
(21) Application number: 10824500.2
(22) Date of filing: 11.10.2010
(51) Int. Cl.: A01N 31/02, A01N 49/00, A01N 27/00, A01P 19/00

(54) **ATTRACTANT BAIT FOR CAPTURING THE COLEOPTERA INSECT MONOCHAMUS GALLOPROVINVCIALIS, THE PINE SAWYER**
KÖDER FÜR DAS COLEOPTERAINSEKT MONOCHAMUS GALLOPROVINCIALIS BZW. GEFLECKTER LANGHORNBOCK
APPÂT ATTRACTIF POUR CAPTURER LE COLÉOPTÈRE PERFORATEUR DU PIN, MONOCHAMUS GALLOPROVINCIALIS

(30) Priority: 21.10.2009 ES 200930883
(43) Date of publication of application: 31.10.2012
(73) Proprietor: Universidad de VAlladolid, 47002 Valladolid (ES)
(72) Inventor: PAJARES ALONSO, Juan Alberto, 47002 Valladolid (ES); ROBERT HALL, David, 47002 Valladolid (ES)
(74) Representative: Ungria López, Javier
(86) International application number: PCT/ES2010/070655
(87) International publication number: WO 2011/048246

(56) References cited:
- US-A1- 2006 008 850
- JEREMY D ALLISON ET AL: "KAIROMONAL RESPONSE BY FOUR Monochamus SPECIES (COLEOPTERA: CERAMBYCIDAE) TO BARK BEETLE PHEROMONES", JOURNAL OF CHEMICAL ECOLOGY, KLUWER ACADEMIC PUBLISHERS-PLENUM PUBLISHERS, NE, vol. 27, no. 4, 1 April 2001 (2001-04-01), pages 633-646, XP019370305, ISSN: 1573-1561, DOI: 10.1023/A:1010353315939
- J. A. PAJARES ET AL: "Attractive responses by Monochamus galloprovincialis (Col., Cerambycidae) to host and bark beetle semiochemicals", JOURNAL OF APPLIED ENTOMOLOGY, vol. 128, no. 9-10, 1 December 2004 (2004-12-01), pages 633-638, XP055084583, ISSN: 0931-2048, DOI: 10.1111/j.1439-0418.2004.00899.x
- FERNANDO IBEAS ET AL: "Olfactory Sex Attraction and Mating Behaviour in the Pine Sawyer Monochamus galloprovincialis (Coleoptera: Cerambycidae)", JOURNAL OF INSECT BEHAVIOR, KLUWER ACADEMIC PUBLISHERS-PLENUM PUBLISHERS, NE, vol. 21, no. 3, 8 February 2008 (2008-02-08), pages 101-110, XP019608955, ISSN: 1572-8889
- F. IBEAS ET AL: "An operative kairomonal lure for managing pine sawyer beetle Monochamus galloprovincialis (Coleoptera: Cerymbycidae)", JOURNAL OF APPLIED ENTOMOLOGY, vol. 131, no. 1, 1 February 2007 (2007-02-01), pages 13-20, XP055084582, ISSN: 0931-2048, DOI: 10.1111/j.1439-0418.2006.01087.x
- BRUNO VINCENT ET AL: "Présence de Bursaphelenchus mucronatus (Nematoda; Aphelenchoididae) en France et association avec Monochamus galloprovincialis (Coleptera: Cerambycidae)", ANNALS OF FOREST SCIENCE, vol. 65, no. 1, 1 January 2008 (2008-01-01), pages 111-111, XP055084634, ISSN: 1286-4560, DOI: 10.1051/forest:2007083
- V. FRANCARDI ET AL: "Pine volatiles and terpenoid compounds attractive to European xylophagous species, vectors of Bursaphelenchus spp. nematodes", PHYTOPARASITICA, vol. 37, no. 4, 17 June 2009 (2009-06-17), pages 295-302, XP055084603, ISSN: 0334-2123, DOI: 10.1007/s12600-009-0038-3
- LAWRENCE M HANKS ET AL: "Using Generic Pheromone Lures to Expedite Identification of Aggregation Pheromones for the Cerambycid Beetles Xylotrechus nauticus, Phymatodes lecontei, and Neoclytus modestus modestus", JOURNAL OF CHEMICAL ECOLOGY, KLUWER ACADEMIC PUBLISHERS-PLENUM PUBLISHERS, NE, vol. 33, no. 5, 29 March 2007 (2007-03-29) , pages 889-907, XP019504152, ISSN: 1573-1561, DOI: 10.1007/S10886-007-9285-2
- PETER J SILK ET AL: "Evidence for a male-produced pheromone in Tetropium fuscum (F.) and Tetropium cinnamopterum (Kirby) (Coleoptera: Cerambycidae)", NATURWISSENSCHAFTEN, SPRINGER, BERLIN, DE, vol. 94, no. 8, 12 April 2007 (2007-04-12) , pages 697-701, XP019535460, ISSN: 1432-1904, DOI: 10.1007/S00114-007-0244-0
- D. RASSATI ET AL: "Monitoring of the pine sawyer beetle Monochamus galloprovincialis by pheromone traps in Italy", PHYTOPARASITICA, vol. 40, no. 4, 26 May 2012 (2012-05-26), pages 329-336, XP055084576, ISSN: 0334-2123, DOI: 10.1007/s12600-012-0233-5
- JUAN A PAJARES ET AL: "Identification and Field Activity of a Male-Produced Aggregation Pheromone in the Pine Sawyer Beetle, Monochamus galloprovincialis", JOURNAL OF CHEMICAL ECOLOGY, KLUWER ACADEMIC PUBLISHERS-PLENUM PUBLISHERS, NE, vol. 36, no. 6, 2 May 2010 (2010-05-02), pages 570-583, XP019822721, ISSN: 1573-1561
- JORGE E. MACIAS-SAMANO ET AL: "2-Undecyloxy-1-ethanol in combination with other semiochemicals attracts three Monochamus species (Coleoptera: Cerambycidae) in British Columbia, Canada", THE CANADIAN ENTOMOLOGIST, vol. 144, no. 06, 11 October 2012 (2012-10-11), pages 764-768, XP55084363, ISSN: 0008-347X, DOI: 10.4039/tce.2012.77
- M. K. FIERKE ET AL: "Identification of a Male-Produced Aggregation Pheromone for <I>Monochamus scutellatus scutellatus</I> and an Attractant for the Congener <I>Monochamus notatus</I> (Coleoptera: Cerambycidae)", JOURNAL OF ECONOMIC ENTOMOLOGY, vol. 105, no. 6, 1 December 2012 (2012-12-01), pages 2029-2034, XP55084579, ISSN: 0022-0493, DOI: 10.1603/EC12101
- IBEAS, F. ET AL.: 'Female recognition and sexual dimorphism of cuticular hydrocarbons' MONOCHAMUS GALLOPROVINCIALIS (COLEOPTERA: CERAMBYCIDAE): BEHAVIOR vol. 102, no. 2, 2009, pages 318 - 325, XP009173645
- IBEAS, F. ET AL.: 'Olfatory sex attraction and mating behaviour in the pine sawyer Monochamus galloprovincialis (Coleoptera: Cerambycidae)' J. INSECT. BEHAV. vol. 21, 2008, pages 101 - 110, XP019608955
- IBEAS; F. ET AL.: 'An operative kairomonal lure for managing pine sawyer beetle Monochamus galloprovincialis (Coleoptera: Cerymbycidae)' J. APPL. ENTOMOL. vol. 131, 2007, pages 13 - 20, XP055084582
- FRANCARDI, V. ET AL.: 'Pine volatiles and terpenoid compounds attractive to European xylophagus species, vectors of Bursaphelenchus spp. nematodes.' PHYTOPARASITICA vol. 37, 2009, pages 295 - 302, XP055084603

## Description

### Field of the invention

The present invention relates to a method for attracting to a trap, pine sawyer insect, known as *Monochamus galloprovincialis,* where there will be captured and controlled. Said insects currently transmit in Europe the pine nematode *(Bursaphelenchus xylophilus),* a pathogen that causes pine wilt disease.

### Background of the invention

The pine wilt disease (PWD) represents in this moment the most serious and destructive threat gravitating over the pine forest in our country and in Europe. This lethal pathology is caused by the pine wood nematode (PWN) *Bursaphelenchus xylophilus,* an organism coming from North America with a quarantine consideration in the European Union, which has already caused the death of millions of trees in Japan, China, Korea and Taiwan. In 1999 for the first time, the introduction of the pathogen was detected in Europe, namely Portugal. Until recently, the disease expanded slowly, circumscribed to an area demarcated within the Marateca Peninsula (Setubal). In 2008, the disease was detected in numerous forest areas of Portugal, some of them dangerously close to the Spanish frontier, and the whole country has been declared as demarcated zone.

The prospecting carried out in Spain have found that wood materials (pallets, logs) coming from Portugal contained this nematode and finally a positive was declared in a tree located in the province of Caceres. Therefore, the severe risk of PWN introduction in our country makes it urgent to apply control measures to avoid the establishment and spreading of this pathogen to our forests. Thus, currently there is a great need and demand of tools that will allow carrying out this control effectively.

The PWN requires necessarily the action of cerambycidae coleopteran insects of the genus *Monochamus* to be transmitted and to infect trees. In Europe, the transmitting species is *Monochamus galloprovincialis.* This insect reproduces itself in the trunk of decaying or freshly dead trees, but it is able to infect healthy trees when sexually immature adults, just after hatching make their way to feed themselves from healthy trees shoots, in such a way that if the insects are transporting nematodes, these then abandon the insect and penetrate into the tree, infecting it, through the feeding bites.

The direct control of the nematode in the woodlands so far has proven to be unfeasible and the efforts to limit the spreading and incidence of the disease are focused in trying to control the vector insect. A method of great utility for tracking, detecting and controlling the vector insect populations, is to capture it using traps with attractant baits. In Asia (Japan, Korea, Taiwan, and China), monoterpene from different pines have been used to attract their *Monochamus* vector species *(M. alternatus, M. saltuarius).* They have mainly used a α-pinene together with ethanol. This blend results slightly attractive and has only certain utility in the detection and monitoring of the insects. In North America, where the nematode originally comes from, but is not virulent for the native pine species, it has been described that the attraction response of the North American *Monochamus (M. scutellatus* and *M*. *clamator* among others) is enhanced when, α-pinene and ethanol are emitted together with other compounds, which are known as components of the aggregation pheromones of the coleopteran scolytidae pine sawyer insects: mainly ipsenol, and ipsdienol. Technically, all these compounds, which area attractive to a species but whose origin is foreign to it (for instance, from the host tree, preys, competitors, etc.) are generically called kairomones (unlike the pheromones, which are produced by the species itself).

In Europe recently the attraction of the *M*. *galloprovincialis* to several combinations of kairomonal substances from trees and scolytidae has been studied, and it has been proven that the combined emission of α-pinene, ipsenol and 2-methyl-3-buten-1-ol constitutes a good attractant bait for the *M*. *galloprovincialis,* which is not enhanced when other kairomonal substances are added (Pajares et al., 04; Ibeas et al., 07). These results have meant a significant progress to manage this plague, by involving a bait, which increases the efficiency in the detection and monitoring of this vector, even though they are not enough for a direct control of the vector insects by means of a massive capture, which would be necessary to manage the disease effectively.

To improve the possibility of controlling this insect through powerful attractant baits several studies have been undertaken to find out if *M*. *galloprovincialis* possessed a sexual or aggregation pheromone that caused the attraction of individuals from both genders, which has been recently suggested, without having found such substance (Ibeas et al., 08).

### Description of the invention

The object of the present invention is to identify the sexual pheromone of *M. galloprovincialis* and to obtain a highly attractant bait for the direct control of this species, and therefore of the disease that it transmits, combining this sexual pheromone with other kairomonal substances.

By bait, according to the present invention, it is not meant a chemical composition, but instead the substances that make it up and that are arranged and used together, but that do not have to be necessarily mixed to each other. Neither, must it be understood as food bait, since it does not contain food elements. The word bait in this field does not necessarily mean something to eat, but instead as used herein, as something that attracts (in English in these cases the word "lure" is more appropriately used).

The present invention relates therefore to a bait for capturing the insect *M. galloprovincialis* characterised in that it comprises the *M. galloprovincialis* pheromone, 2-undecyloxy-1-ethanol, and at least two kairomones, which are attractant for this species.

The pheromone, 2-undecyloxy-1-ethanol, is present in the bait in an amount comprised between 10 mg and 1000 mg, preferably between 20 and 500 mg, more preferably between 25 and 300 mg, and even more preferably between 40 and 200 mgr

The *M. galloprovincialis* pheromone, 2-undecyloxy-1-ethanol, is a volatile compound and this property is what it makes it especially suitable for the aimed objective.

According to particular embodiments of the invention, the bait comprises 2-undecyloxy-1-ethanol and kairomones from the insect host tree as well as from scolytidae. In other cases, the bait comprises 2-undecyloxy-1-ethanol, at least a kairomone from the host tree and at least a kairomone from scolytidae.

The kairomone from the host tree can be a monoterpene, such as α-pinene, such as α-pinene. Said kairomone from the hosting tree is present in the bait in an amount comprised between 1 g and 400 g, preferably between 10 g and 300 g, more preferably between 20 g and 200 g, and even more preferably between 30 g and 100 g.

When the bait comprises kairomones from the host tree and kairomones from scolytidae, the former are present in the bait in an amount comprised between 1 g and 400 g, and the scolytidae kairomone are each present in the bait in an amount comprised between 10 mg and 20 g, preferably the amount of tree kairomones present in the bait is comprised between 10 g and 300 g and the amount of each scolytidae kairomone present in the bait is comprised between 15 mg and 15 g, more preferably the amount of tree kairomones present in the bait is comprised between 30 g and 100 g and the amount of each scolytidae kairomone present in the bait is comprised between 20 mg and 10.

According to additional particular embodiments, the bait comprises 2-undecyloxy-1-ethanol and kairomones coming exclusively from scolytidae, preferably two scolytidae kairomones.

The scolytidae kairomones are preferably selected among ipsenol, 2-methyl-3-butanol, and ipsdienol.

A specially preferred embodiment is the one comprising 2-undecyloxy-1-ethanol, α-pinene, ipsenol, and 2-methyl-3-butanol.

A further specially preferred embodiment is the one comprising 2-undecyloxy-1-ethanol, ipsenol, and 2-methyl-3-butanol.

The ipsenol is present in the bait in an amount comprised between 10 mg and 3000 mg, preferably between 15 mg and 2000 mg, more preferably between 20 and 1000 mg, and even more preferably between 20 and 700 mg.

The ipsdienol is present in the bait in an amount comprised between 10 mg and 3000 mg, preferably between 15 mg and 2000 mg, more preferably between 20 and 1000 mg, and even more preferably between 20 and 700 mg.

The 2-methyl-3-butanol is present in the bait in an amount comprised between 100 mg and 20000 mg, preferably between 200 mg and 15000 mg, more preferably between 500 and 10000 mg, and even more preferably between 1000 and 5000 mg.

An especially preferred embodiment is a lure comprising:
- 2-undecyloxy-1-ethanol in an amount comprised between 10 mg and 1000 mg,
- ipsenol in an amount comprised between 10 mg and 1000 mg, and
- 2-methyl-3-butanol in an amount comprised between 100 mg and 5000 mg.

A specially additional preferred embodiment is a lure comprising:
- 2-undecyloxy-1-ethanol in an amount comprised between 10 mg and 1000 mg,
- α-pinene in an amount comprised between 1 g and 300 g,
- ipsenol in an amount comprised between 10 mg and 1000 mg, and
- 2-methyl-3-butanol in an amount comprised between 100 mg and 5000 mg.

The substances that make up the bait of the invention can be emitted from a single dispenser or from more than one dispenser, but as preferred embodiment, each is emitted from independent dispensers. Therefore, they are not mixed to each other but instead the blend takes place in the air when they are released jointly. According to particular embodiments, some of them can be emitted together, like the ipsenol and the methyl-butanol. According to other embodiments, the bait consists of two or three dispensers (like a kit) that are installed together in the trap, which is quite frequent in the attractants field. This is due to the different diffusion velocities of each substance, making it necessary to use different dispensers to obtain adequate delivery rates.

There is not a placement order in the trap, they are hung one next to the other; the kind of trap is irrelevant, provided that they are among the adequate ones for the capture of this insect.

The present invention relates also to a trap characterised in that it comprises the bait previously defined in this specification.

The present invention relates also to the use, and more particularly to the combined use of the *M. galloprovincialis* pheromone, 2-undecyloxy-1-ethanol, with at least two kairomones, which are attractant for this species, in the preparation of a bait for capturing the insect *M. Galloprovincialis.* The combined use, according to this invention meaning the simultaneous use of the pheromone and the kairomones in a bait.

The present invention provides a highly effective attractant bait for capturing cerambycidae coleopteran insects, pine sawyers, of the genus *Monochamus galloprovincialis.*

The ipsenol, 2-methyl-3-butanol and α-pinene are kairomones known to attract this species. However, the combination of this pheromone with the three kairomones results in a synergic effect that involves an attraction two times more effective than the sum of the attractions achieved by the pheromone and the kairomones separately. This new pheromonal bait allows capturing in a very efficient manner, this relevant insect, necessary transmitter of the dangerous pinewood nematode, a lethal pathogen that is currently threatening the pine forests of Spain and Europe. The use of the revealed bait will increase the possibilities of controlling this disease.

### Brief description of the figures

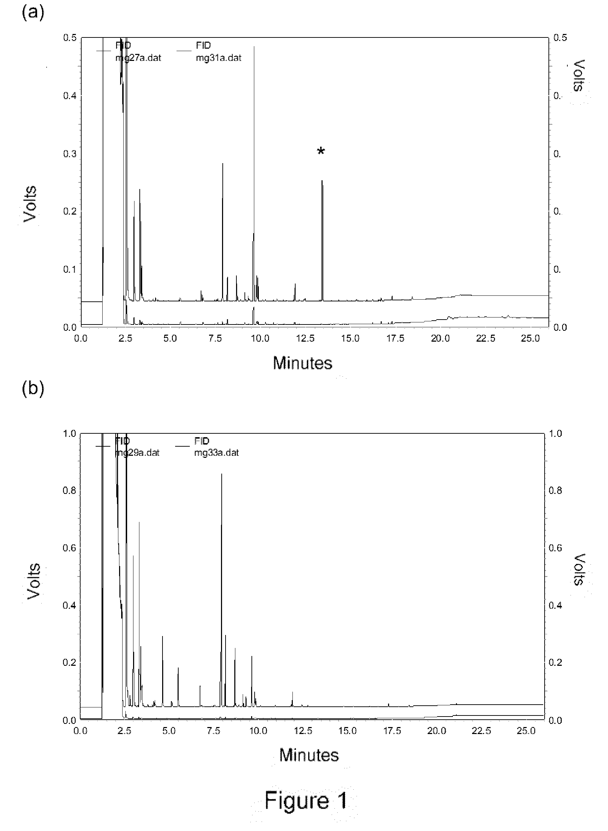

Figure 1 shows a GC-FID analysis of volatiles collected from *M. galloprovincialis* during daylight periods: (a) analysis of pine shoots collected alone (24 hr; lower trace) and after introducing a *M*. *galloprovincialis* mature male (upper trace; 48 hr); (b) analysis of pine shoots collected alone (24 hr; lower trace) and after introducing a *M. galloprovincialis* mature female (upper trace; 48 hr). Specific male compound marked with an *.

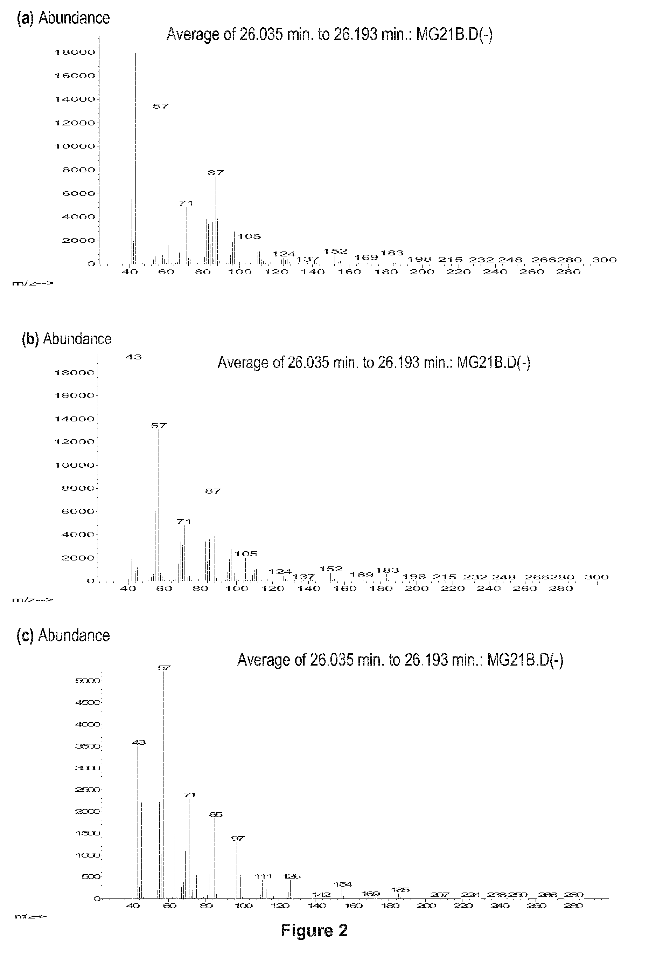

Figure 2 shows an EI mass spectrum of (a) a specific compound of the *M. galloprovincialis* males (b) this same compound after acetylation and (c) synthetic 2-undecyloxy-1-ethanol.

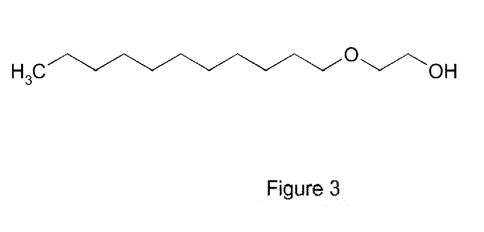

Figure 3 shows the structure of the *M. galloprovincialis* male specific compound.

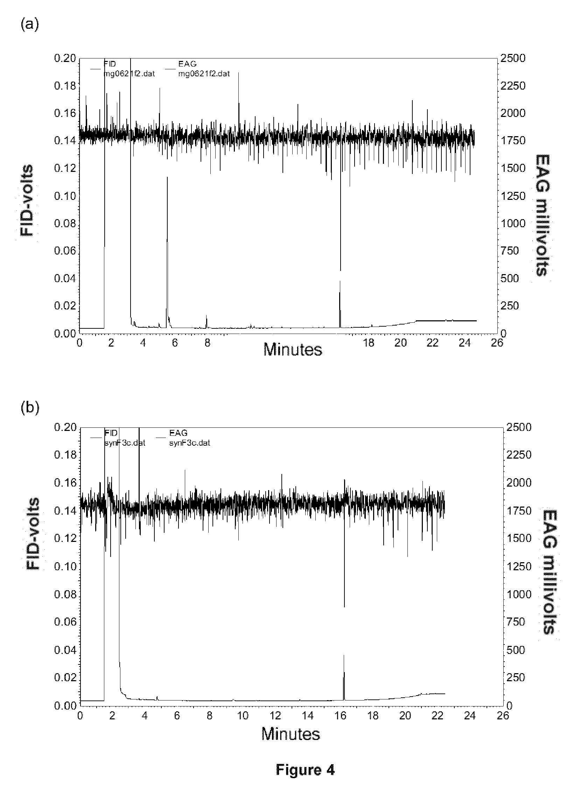

Figure 4 shows a GC-EAG analysis with EAG recordings of the *M. galloprovincialis* female antennae: (a) volatiles from mature males; (b) synthetic 2-undecyloxy-1-ethanol (10 ng injected).

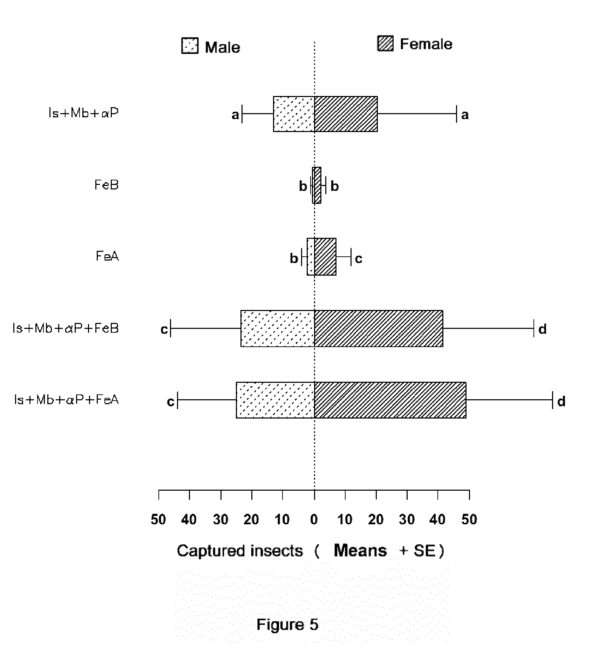

Figure 5 shows the average number of *M. galloprovincialis* captured by means of a trap (S. Espuña, Murcia, from 3 July to 7 August 2008) in multiple funnel traps baited with kairomones and the pheromonal compound of *M*. *galloprovincialis.* The compounds are: aP, α-pinene; Is, Ipsenol; Mb, 2-methyl-3-butanol; FeL, low pheromone doses; FeH, high pheromone doses. For each gender, bars followed by the same letter are not significantly different. LSD Test, P > 0.05. ANOVA statistics are: Male: F = 22.85, d.f. = 4, P < 0.0001, n = 7; Females: F = 26.03, d.f. = 4, P < 0.0001, n = 7

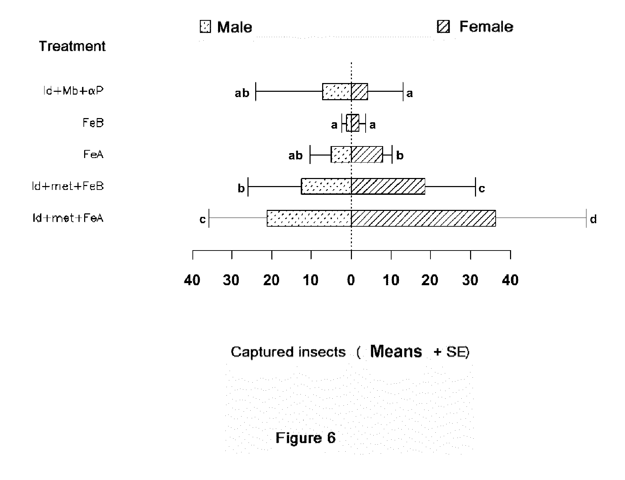

Figure 6 shows the average number of *M*. *galloprovincialis* captured by means of a trap (S. Espuña, Murcia, from 7 August to 26 September 2008) in multiple funnel traps baited with kairomones and with the pheromonal compound of *M. galloprovincialis.* The compounds are: aP, α-pinene; Id, Ipsdienol; Mb, 2-methyl-3-butanol; FeL, low pheromone doses; FeH, high pheromone doses. For each gender, bars followed by the same letter are not significantly different. LSD test, P > 0.05. ANOVA statistics are: Males: F = 10.95, d.f. = 4, P <0.0001, n =7; Females: F = 22.87, d.f. = 4, P <0.0001, n = 7.

### Example 1

A lure has been prepared according to the invention as follows:
A dispenser of 2-undecyloxy-1-ethanol containing 50 mgr, a dispenser of α-pinene containing 200 g, a dispenser of ipsenol containing 40 mg and a dispenser of 2-methyl-3-butanol containing 4000 mg. The four dispensers are arranged hanging simultaneously in the same trap.

### Example 2

To identify the sexual pheromone of the *M*. *galloprovincialis* a collection of volatiles was carried out separately from pine twigs alone, from 1 to 3 sexually mature males together with the pine twigs, and from 1 to 3 mature females with pine twigs. The comparison of the obtained volatile chromatograms (Fig. 1) revealed the presence of an additional compound only in the aerations with males. The retention time of this compound in the GC (Gas Chromatograph) is indicated in Table 1 and the EI mass spectrograph in Figure 2a

**Table 1. GC Retention data for the specific compound of M. galloprovincialis males.**

| Species (compound) | Retention Index Wax | SPB5 | (RI)^{a} Δ^{b} |
|---|---|---|---|
| *M. galloprovincialis* | 2126 | 1617 | 509 |
| *M. galloprovincialis* | 2152 | 1778 | 374 |
| After acetylation 2-undecyloxy-1-ethanol | 2126 | 1617 | 509 |

| | | | |
|---|---|---|---|
| ^{a} Retention indexes relative to the retention time of straight-chain hydrocarbons ^{b} Difference between RI in the polar column and RI in the non-polar column. | | | |

The comparison of the libraries initially indicated a 38% adjustment for hexyloxyethan-1-ol. The mass spectrum of the *M. galloprovincialis* male compound (Fig. 2a) showed an unusual ion in *m*/*z* 63 corresponding to protonated ethanediol (HOCH₂CH₂OH₂⁺). The ion in *m*/*z* 154 could be due to (C₉H₁₉-CH=CH₂)⁺ formed by the removal of an ether group from the structure C₁₁H₂₃-. A McLafferty rearrangement of this moiety would result in C₇H₁₅CH=CH₂⁺ in *m*/*z* 126. The ion in *m*/*z* 185 would then correspond to a loss of -CH₂-OH of a molecular weight of 216 by partitioning α-β to ether. Therefore, 2-undecyloxyethan-1-ol (Fig. 3) was considered a possible structure for the male compound. It was synthesised from 1-bromoundecane and ethanodiol and it was verified that it had identical GC retention times (Table 1) and mass spectrum (Fig. 2c) than the compounds of the *M. galloprovincialis* mature males. The amounts of said compound obtained from the two male, collected throughout daylight periods were 0.4 µg/hour/male and 1.3 µg/hour/male.

Gas-chromatography-electroantennographies (GC-EAG) were carried out to study its biological activity and to confirm the male compound identification. In the GC-EAG analysis of the volatile collections from *M. galloprovincialis* males and females, a consistent EAG response was recorded in the antennae of both, females (Fig. 4a) and males to the specific male compound. The synthetic compound 2-undecyloxy-1-ethanol also triggered a EAG response in the antenna of males and females (Fig. 4be). The response of the males' antennae seemed slightly lower to the one of the females'. The absolute responses of the antenna above the control (target) to the 14 ng of the natural specific compound were 0.83 ± S.E. 0.32 mV (*N* = 3) and 1.85 ± S.E. 0.15 mV (*N* = 3) in males and females respectively, and the responses to 10 ng of the synthetic compound were 0.66 ± S.E. 0.09 mV (*N* = 5) and 1.51 ± S.E. 0.15 mV (*N* = 9) respectively. These differences with the target were significant in a test t for the 14 ng of natural compound *P* = 0.001 and for the 10 ng of synthetic compound *P* = 0.023.

To know if the *M. galloprovincialis* was attracted by the pheromonal compound identified in the field, and to thus demonstrate its function as pheromone of the species, and moreover to compare this attraction with the attraction to known kairomone combinations, two field experiments were carried out. The first experiment lasted 5 weeks (from 3 July to 7 August), the second one lasted 7 weeks (from 7 August to 26 September), and they were conducted in a forest of *Pinus halepensis* in Sierra Espuña (Murcia). In both experiments, a design of blocks completed randomly with seven repetitions (blocks). The treatments, which were constituted by combinations of the different attractant substances, were arranged in multiple funnel traps. Each of the tested substances was emitted from independent dispensers. The 2-undecyloxy-1-ethanol was emitted from two types of dispensers, a vial and a sachet, of polyethylene containing 50 mgr each. The α-pinene was emitted from tube dispensers of polyethylene containing 200 gr. each. The ipsenol, the ipsdienol and the methyl-butanol were emitted from commercial dispensers available from the company Pherotech (Canada) each containing respectively 40 mgr, 40 mgr, and 4000 mgr. The emission rates of all these dispensers, under controlled conditions in the laboratory, are indicated in Table 2. The combinations tested as lures in experiment 1 were the following:
1) the triple kairomonal combination of ipsenol+methyl-butanol+α-pinene,
2) low emission of 2-undecyloxy-1-ethanol,
3) high emission of 2-undecyloxy-1-ethanol,
4) the triple kairomonal combination + low 2-undecyloxy-1-ethanol emission, and
5) the triple kairomonal combination + high 2-undecyloxy-1-ethanol emission, of example 1.

The independent dispensers described in example 1 were the ones used in the experiment, in different combinations.

In experiment 2 the tested combinations were:
1) the triple kairomonal combination of ipsdienol+methyl-butanol+α-pinene,
2) low 2-undecyloxy-1-ethanol emissions,
3) high 2-undecyloxy-1-ethanol emissions,
4) the double kairomonal combination of low ipsdienol+methyl-butanol + 2-undecyloxy-1-ethanol emissions, and
5) the double kairomonal combination of high ipsdienol+methyl-butanol + 2-undecyloxy-1-ethanol emissions.

Within each block, the distance between traps was at least 150 m, and nearest blocks were 500 m apart. The collecting containers of the traps were provided with a DDVP insecticide tablet to prevent trapped insects from escaping. All the traps were periodically examined every 10 days and the captured insects were preserved for its subsequent identification and counting. The response of each *M. galloprovincialis* gender was studied to each tested attractant combinations. The data from both genders were previously transformed with the square root function to meet the normality and homocedasticity conditions and were submitted to an analysis of variance ANOVA (GLM) for a design of random blocks with the SAS informatics system. The means were compared by LSD Fisher's test with a signification level of α=0.05

**Table 2: emission doses of the compounds used in the two field experiments for attracting M. galloprovincialis, estimated in a laboratory at ¹: 25° C, or at ²:27° C.**

| **Compound** | **Enantiomeric ratio (+:- Release rate (mg/24h)** | |
|---|---|---|
| α-pinene | 5-10:90-95 | 2859 *¹* |
| Ipsenol | 50:50 | 0.4 *¹* |
| Ipsdienol | 50:50 | 0.2 *¹* |
| 2-methyl-but-(3)en(1)ol | ----- | 11 *¹* |
| 2-undecyloxy-1-ethanol (low) | ----- | 0.16 ² |
| 2-undecyloxy-1-ethanol (high) | ----- | 0.76 ² |

The indicated release results of 0.76 mg per day were obtained, for instance, in the laboratory at a temperature of 27 °C and a wind speed of 8 km /hour.

The results of experiment 1, besides verifying once again the attracting power of the kairomonal blend of ipsenol, 2-methyl-3-butanol and α-pinene described by Ibeas et al. (07), they showed that the females, mainly, and the males of *M. galloprovincialis* were attracted by synthetic 2- undecyloxy-1-ethanol, confirming its role as pheromone in this species (Fig. 5) . The high emission dispensers captured three times more females than low emission dispensers did. Compared to the standard kairomonal lure, the pheromone resulted to be less attractive at the tested doses.

A highly significant result was that a very high synergistic effect was found when both compound types, the pheromone and the kairomones, where released together. The number of females attracted by the pheromonal-kairomonal lure was more than an 80% higher than the total sum of the separate captures of each bait, pheromone and kairomones, and in the case of the males, the synergistic effect was an 80-90% higher. Even though the average number of captures was larger with the pheromone (high) + kairomone combination (73.6 insects/trap) than with the pheromone (low) + kairomone combination (64.8 insects/trap), the difference between both was not significant.

The results of the second experiment confirmed those obtained from the first experiment. The triple kairomonal blend, with the ipsenol replaced by the ipsdienol was attractive, even though it obtained less captures (11.4 insects/trap) than those achieved in the first experiment with the first triple blend. The low pheromone emission as well as the high emission was attractive for both, *M. galloprovincialis,* males and females, at high emission rates (13 insects/trap), significantly more in females than with the kairomonal blend. Once again, the combination of the pheromone with the kairomones, in this case with only two compounds from scolytidae, ipsdienol + methyl-butanol, obtained a potent synergistic effect, achieving the capture of 31 insects/trap using the combination with low pheromone emission, and 57.8 insects/trap, significantly more, using the combination with the high pheromone emission. The captures obtained with the latter lure were, however, not as high as those obtained for a shorter period of time by the high pheromone emission + ipsenol, 2-methyl-3-butanol and α-pinene combination, tested in experiment 1 (73.6 insects/trap), indicating that this combination could be better, even though both experiments were conducted in different periods so both combinations cannot be directly compared.

Therefore, 2-undecyloxy-1-ethanol is produced by *M. galloprovincialis* sexually mature males, triggering electroantennographic responses in the antennae of both genders and is attractant, in the field, for males and females of this species This proves its role as aggregative pheromone of *M*. *galloprovincialis.* 2-undeciloxyethan-1-ol as the first case in the Lamiinae (Cerambycidae) subfamily of a sex-specific pheromonal compound with a significant behavioural activity, which can be used for luring and capturing insects in the field. But not only 2-undecyloxy-1-ethanol is an attractant pheromone, but also it enormously synergizes the attraction of this species to the know kairomones blend, both constituting a combined lure of great utility, which captures males as well as females, which is of utmost importance. This extremely high attractant power attained captures of 2 insects per trap and day, in a non-epidemic population of the cerambycidae. This result is quite relevant for controlling this plague and the disease it transmits. A lure made up of at least the combination of 2- undecyloxy-1-ethanol, ipsenol, and 2-methyl-3-butanol could be successfully used for an operative management of the pine wilt disease, through the monitoring and massive trapping of the insect transmitting it in traps baited with the attractant bait of the invention.

### References

IBEAS, F., GALLEGO, D., DIEZ, J. J., and PAJARES, J. A. 2007. An operative kairomonal lure for managing pine sawyer beetle Monochamus galloprovincialis (Coleóptera: Cerambycidae). J. Appl. Entomol. 131:13-20.
PAJARES, J. A., IBEAS, F., DIEZ, J. J., and GALLEGO, D. 2004. Attractive responses by Monochamus galloprovincialis (Col., Cerambycidae) to host and bark beetle semiochemicals. J. Appl. Entomol. 128:633-638
IBEAS, F., DIEZ, J. J., and PAJARES, J. A. 2008. Olfactory sex attraction and mating behaviour in the pine sawyer Monochamus galloprovincialis (Coleóptera: Cerambycidae). J. Insect Behav. 21:101-110

## Claims

1. An attractant bait for capturing the pine sawyer coleopteran insect, *Monochamus galloprovincialis,* **characterized in that** it comprises the *M. gallopro*vincialis pheromone, 2-undecyloxy-1-ethanol, and at least two kairomones that attract said species.

2. A bait as claimed in claim 1, **characterized in that** 2-undecyloxy-1-ethanol is present in the bait in an amount comprised between 10 mg and 1000 mg.

3. A bait as claimed in claim 1, **characterized in that** said kairomones come from the host tree of the insect or from scolytidae.

4. A bait as claimed in claim 3, **characterized in that** it comprises at least a kairomone coming from the host tree and at least a kairomone coming from scolytidae.

5. A bait as claimed in any one of the preceding claims 3 or 4, **characterized in that** the tree kairomones are present in the bait in an amount comprised between 1 g and 400 g, and the scolytidae kairomones are each present in the bait in an amount comprised between 10 mg and 20 g.

6. A bait as claimed in one of the preceding claims 3 to 5, **characterized in that** said tree kairomone is a monoterpene.

7. A bait as claimed in claim 6, **characterized in that** said monoterpene is α-pinene.

8. A bait as claimed in claim 7, **characterized in that** the α-pinene is present in the bait in an amount comprised between 1 g and 400 g.

9. A bait as claimed in claim 1 or 3, **characterized in that** it comprises two kairomones coming from scolytidae.

10. A bait as claimed in claim 3 or 9, **characterized in that** said scolytidae kairomones are selected from ipsenol, 2-methyl-3-butanol and ipsdienol.

11. A bait as claimed in claim 1, **characterized in that** it comprises 2-undecyloxy-1-ethanol, alfa-pinene, ipsenol and 2-methyl-3-butanol.

12. A bait as claimed in claim 1, **characterized in that** it comprises 2-undecyloxy-1-ethanol, ipsenol and 2-methyl-3-butanol.

13. A bait as claimed in one claim 10 to 12, **characterized in that** ipsenol is present in the bait in an amount comprised between 10 mg and 3000 mg.

14. A bait as claimed in claim 10, **characterized in that** ipsdienol is present in the bait in an amount comprised between 10 mg and 3000 mg.

15. A bait as claimed in any one of the preceding claims 10 to 12, **characterized in that** 2-methyl-3-butanol is present in the bait in an amount comprised between 100 mg and 20000 mg.

16. A bait as claimed in claim 12, **characterized in that** it comprises:
- 2-undecyloxy-1-ethanol in an amount comprised between 10 mg and 1000 mg;
- ipsenol in an amount comprised between 10 mg and 3000 mg; and
- 2-methyl-3-butanol in an amount comprised between 100 mg and 20000 mg.

17. A bait as claimed in claim 11, **characterized in that** it comprises:
- 2-undecyloxy-1-ethanol in an amount comprised between 10 mg and 1000 mg;
- α-pinene in an amount comprised between 1 g and 400 g;
- ipsenol in an amount comprised between 10 mg and 3000 mg;
- 2-methyl-3-butanol in an amount comprised between 100 mg and 20000 mg.

18. A bait as claimed in claim 1 **characterized in that** the pheromone and each one of the kairomones is present in the bait in the same dispenser or in independent dispensers.

19. A trap **characterized in that** it comprises the bait defined in any one of the preceding claims 1 to 18.

20. A combined use of the *M*. *galloprovincialis* pheromone, 2-undecyloxy-1-ethanol, with at least two kairomones that attract said species, to prepare a bait for capturing the *M. galloprovincialis* insect.

## Patentansprüche

1. Lockstoffköder zum Fangen des Kiefernbockkäfer-Insekts *Monochamus galloprovincialis* (Bäckerbock bzw. Gefleckter Langhornbock), **dadurch gekennzeichnet, dass** er das *M. galloprovincialis-Pheromon* 2-Undecyloxy-1-ethanol und wenigstens zwei Kairomone umfasst, welche diese Spezies anlocken.

2. Köder nach Anspruch 1, **dadurch gekennzeichnet, dass** 2-Undecyloxy-1-ethanol in einer Menge zwischen 10 mg und 1000 mg in dem Köder vorhanden ist.

3. Köder nach Anspruch 1, **dadurch gekennzeichnet, dass** die Kairomone aus dem Wirtsbaum des Insekts oder aus Borkenkäfern herrühren.

4. Köder nach Anspruch 3, **dadurch gekennzeichnet, dass** er wenigstens ein Kairomon, das aus dem Wirtsbaum herrührt, und wenigstens ein Kairomon, das aus Borkenkäfern herrührt, umfasst.

5. Köder nach einem der vorangehenden Ansprüche 3 oder 4, **dadurch gekennzeichnet, dass** die Baumkairomone in einer Menge zwischen 1 g und 400 g in dem Köder vorhanden sind und die Borkenkäferkairomone jeweils in einer Menge zwischen 10 mg und 20 g in dem Köder vorhanden sind.

6. Köder nach einem der vorangehenden Ansprüche 3 bis 5, **dadurch gekennzeichnet, dass** das Baumkairomon ein Monoterpen ist.

7. Köder nach Anspruch 6, **dadurch gekennzeichnet, dass** das Monoterpen α-Pinen ist.

8. Köder nach Anspruch 7, **dadurch gekennzeichnet, dass** das α-Pinen in einer Menge zwischen 1 g und 400 g in dem Köder vorhanden ist.

9. Köder nach Anspruch 1 oder 3, **dadurch gekennzeichnet, dass** er zwei Kairomone umfasst, die aus Borkenkäfern herrühren.

10. Köder nach Anspruch 3 oder 9, **dadurch gekennzeichnet, dass** die Borkenkäferkairomone ausgewählt sind aus Ipsenol, 2-Methyl-3-butanol und Ipsdienol.

11. Köder nach Anspruch 1, **dadurch gekennzeichnet, dass** er 2-Undecyloxy-1-ethanol, alpha-Pinen, Ipsenol und 2-Methyl-3-butanol umfasst.

12. Köder nach Anspruch 1, **dadurch gekennzeichnet, dass** er 2-Undecyloxy-1-ethanol, Ipsenol und 2-Methyl-3-butanol umfasst.

13. Köder nach einem der Ansprüche 10 bis 12, **dadurch gekennzeichnet, dass** Ipsenol in einer Menge zwischen 10 mg und 3000 mg in dem Köder vorhanden ist.

14. Köder nach Anspruch 10, **dadurch gekennzeichnet, dass** Ipsdienol in einer Menge zwischen 10 mg und 3000 mg in dem Köder vorhanden ist.

15. Köder nach einem der vorangehenden Ansprüche 10 bis 12, **dadurch gekennzeichnet, dass** 2-Methyl-3-butanol in einer Menge zwischen 100 mg und 20000 mg in dem Köder vorhanden ist.

16. Köder nach Anspruch 12, **dadurch gekennzeichnet, dass** er umfasst:
- 2-Undecyloxy-1-ethanol in einer Menge zwischen 10 mg und 1000 mg;
- Ipsenol in einer Menge zwischen 10 mg und 3000 mg; und
- 2-Methyl-3-butanol in einer Menge zwischen 100 mg und 20000 mg.

17. Köder nach Anspruch 11, **dadurch gekennzeichnet, dass** er umfasst:
- 2-Undecyloxy-1-ethanol in einer Menge zwischen 10 mg und 1000 mg;
- α-Pinen in einer Menge zwischen 1 g und 400 g;
- Ipsenol in einer Menge zwischen 10 mg und 3000 mg;
- 2-Methyl-3-butanol in einer Menge zwischen 100 mg und 20000 mg.

18. Köder nach Anspruch 1, **dadurch gekennzeichnet, dass** das Pheromon und jedes der Kairomone in dem Köder in der gleichen Ausgabevorrichtung oder in unabhängigen Ausgabevorrichtungen vorhanden ist.

19. Falle, **dadurch gekennzeichnet, dass** sie den in einem der vorangehenden Ansprüche 1 bis 18 definierten Köder umfasst.

20. Kombinierte Verwendung des *M. galloprovincialis*-Pheromons, 2-Undecyloxy-1-ethanol, mit wenigstens zwei Kairomonen, welche die Spezies anlocken, um einen Köder zum Fangen des *M. galloprovincialis*-Insekts herzustellen.

## Revendications

1. Appât attractif pour capturer l'insecte coléoptère perforateur du pin, Monochamus galloprovincialis, **caractérisé en ce qu'**il comprend la phéromone de M. galloprovincialis, du 2-undécyloxy-1-éthanol et au moins deux kairomones qui attirent ladite espèce.

2. Appât selon la revendication 1, **caractérisé en ce que** le 2-undécyloxy-1-éthanol est présent dans l'appât en une quantité comprise entre 10 mg et 1 000 mg.

3. Appât selon la revendication 1, **caractérisé en ce que** lesdites kairomones proviennent de l'arbre hôte de l'insecte ou de scolytidés.

4. Appât selon la revendication 3, **caractérisé en ce qu'**il comprend au moins une kairomone provenant de l'arbre hôte et au moins une kairomone provenant de scolytidés.

5. Appât selon l'une quelconque des revendications 3 ou 4 précédentes, **caractérisé en ce que** les kairomones d'arbre sont présentes dans l'appât en une quantité comprise entre 1 g et 400 g, et les kairomones de scolytidés sont présentes chacune dans l'appât en une quantité comprise entre 10 mg et 20 g.

6. Appât selon l'une quelconque des revendications 3 à 5 précédentes, **caractérisé en ce que** ladite kairomone d'arbre est un monoterpène.

7. Appât selon la revendication 6, **caractérisé en ce que** ledit monoterpène est l'α-pinène.

8. Appât selon la revendication 7, **caractérisé en ce que** l'α-pinène est présent dans l'appât en une quantité comprise entre 1 g et 400 g.

9. Appât selon la revendication 1 ou 3, **caractérisé en ce qu'**il comprend deux kairomones provenant de scolytidés.

10. Appât selon la revendication 3 ou 9, **caractérisé en ce que** lesdites kairomones de scolytidés sont choisies parmi l'ipsénol, le 2-méthyl-3-butanol et l'ipsdiénol.

11. Appât selon la revendication 1, **caractérisé en ce qu'**il comprend du 2-undécyloxy-1-éthanol, de l'alpha-pinène, de l'ipsénol et du 2-méthyl-3-butanol.

12. Appât selon la revendication 1, **caractérisé en ce qu'**il comprend du 2-undécyloxy-1-éthanol, de l'ipsénol et du 2-méthyl-3-butanol.

13. Appât selon les revendications 10 à 12, **caractérisé en ce que** l'ipsénol est présent dans l'appât en une quantité comprise entre 10 mg et 3 000 mg.

14. Appât selon la revendication 10, **caractérisé en ce que** l'ipsdiénol est présent dans l'appât en une quantité comprise entre 10 mg et 3 000 mg.

15. Appât selon l'une quelconque des revendications 10 à 12 précédentes, **caractérisé en ce que** le 2-méthyl-3-butanol est présent dans l'appât en une quantité comprise entre 100 mg et 20 000 mg.

16. Appât selon la revendication 12, **caractérisé en ce qu'**il comprend :
- du 2-undécyloxy-1-éthanol en une quantité comprise entre 10 mg et 1 000 mg ;
- de l'ipsénol en une quantité comprise entre 10 mg et 3 000 mg ; et
- du 2-méthyl-3-butanol en une quantité comprise entre 100 mg et 20 000 mg.

17. Appât selon la revendication 11, **caractérisé en ce qu'**il comprend :
- du 2-undécyloxy-1-éthanol en une quantité comprise entre 10 mg et 1 000 mg ;
- de l'α-pinène en une quantité comprise entre 1 g et 400 g ;
- de l'ipsénol en une quantité comprise entre 10 mg et 3 000 mg ;
- du 2-méthyl-3-butanol en une quantité comprise entre 100 mg et 20 000 mg.

18. Appât selon la revendication 1 **caractérisé en ce que** la phéromone et chacune des kairomones sont présentes dans l'appât dans le même distributeur ou dans des distributeurs indépendants.

19. Piège **caractérisé en ce qu'**il comprend l'appât défini dans l'une quelconque des revendications 1 à 18 précédentes.

20. Utilisation combinée de la phéromone de M. galloprovincialis, du 2-undécyloxy-1-éhanol, avec au moins deux kairomones qui attirent ladite espèce, pour préparer un appât pour capturer l'insecte M. galloprovincialis.
